# EUROPEAN PATENT SPECIFICATION

(11) **EP 3 547 024 B1**
(45) Date of publication and mention of the grant of the patent: **16.11.2022**
(21) Application number: 17874642.6
(22) Date of filing: 31.03.2017
(51) Int. Cl.: G03B 43/00, G03B 37/00, G06T 7/80, H04N 5/232

(54) **MASS PRODUCTION METHOD AND SYSTEM FOR PANORAMA CAMERA**
MASSENHERSTELLUNGSVERFAHREN UND -SYSTEM FÜR PANORAMAKAMERA
PROCÉDÉ ET SYSTÈME DE PRODUCTION DE MASSE POUR CAMÉRA PANORAMIQUE

(30) Priority: 24.11.2016 CN 201611043274
(43) Date of publication of application: 02.10.2019
(73) Proprietor: Shenzhen Pisoftware Technology Co., Ltd., Nanshan District Shenzhen Guangdong 518057 (CN)
(72) Inventor: SHEN, Jingcheng, Shenzhen Guangdong 518000 (CN); WANG, Chao, Shenzhen Guangdong 518000 (CN)
(74) Representative: dompatent von Kreisler Selting Werner - Partnerschaft von Patent- und Rechtsanwälten mbB
(86) International application number: PCT/CN2017/079090
(87) International publication number: WO 2018/094940

(56) References cited:
- WO-A1-2014/106303
- CN-A- 103 533 266
- CN-A- 105 141 920
- CN-A- 105 430 376
- CN-A- 105 447 850
- CN-A- 105 608 693
- JP-A- 2011 182 176
- US-A1- 2008 002 023
- US-A1- 2014 300 736
- US-A1- 2016 182 903

## Description

### TECHNICAL FIELD

The present application relates to the field of panoramic cameras, and in particular, to a method and system for inspection of the panoramic camera splicing before mass production of a panoramic camera.

### BACKGROUND

With continuous development of panoramic cameras, the demand for the panoramic cameras has been increasing. However, the production efficiency of panoramic cameras is low because the photo splicing effect of panoramic cameras needs to be inspected during the production process.

At present, mass production of the panoramic cameras is still at an explorative stage, and major manufacturers have not found an effective method for inspecting the splicing effect of panoramic photos. Therefore, a method for solving the problem of inspecting the panoramic photo splicing effect to achieve mass production needs to be developed.

CN 105 430 376 A discloses a method and a device for detecting consistency of a panoramic camera, which are used for the technical field of panoramic cameras. The method comprises the following steps of carrying out frame extraction on a video shot by the panoramic camera, wherein the video is shot under the environment that each camera of the panoramic camera is at the same brightness and faces to the same standard reference; obtaining a mean gray value of a video image obtained by frame extraction, respectively obtaining a difference between each obtained mean gray value and a gray reference value corresponding to the mean gray value and taking a sum of all differences as a brightness consistency index parameter; obtaining a color value of the standard reference shot by each camera in the video image obtained by frame extraction and a mean square error of a color reference value corresponding to the color value, and taking a sum of all mean square errors as a color consistency index parameter.

US 2016/182903 A1 describes systems, methods and articles of manufacture for calibrating a camera. In one embodiment, a computing system may be coupled to a calibration apparatus and the camera to programmatically identify the intrinsic properties of the camera. The calibration apparatus includes a plurality of light sources which are controlled by the computer system. By selectively activating one or more of the light sources, the computer system identifies correspondences that relate the 3D position of the light sources to the 2D image captured by the camera. The computer system then calculates the intrinsics of the camera using the 3D to 2D correspondences. After the intrinsics are measured, cameras may be further calibrated to in order to identify 3D locations of objects within their field of view in a presentation area. Using passive markers in a presentation area, computing system may use an iterative process that estimates the actual pose of the camera.

### SUMMARY

In view of all above, embodiments of the present application provide a method and system for mass production of a panoramic camera, which can perform efficient inspection of the panoramic camera splicing according to a calibration parameter through quick setting of a calibration room.

In the first aspect, a method for inspection of the panoramic camera splicing before mass production of a panoramic camera is provided. The method includes:
setting a calibration room for a to-be-produced camera;
calculating a calibration parameter of the to-be-produced camera, and performing panoramic splicing of the to-be-produced camera according to the calibration parameter;
determining whether the to-be-produced camera is qualified according to an effect of the panoramic splicing of the to-be-produced camera, and if there is no serious splicing seam in the effect of panoramic photo splicing, a mass production device mass-produces the to-be-produced camera.

The method for setting the calibration room includes:
determining a ratio of length to width to height of the calibration room; and
determining the number of calibration feature patterns and corresponding locations.

Preferably, the method for inspection of the panoramic camera splicing before mass production of a panoramic camera further includes:
controlling the to-be-produced camera to take a photo, and receiving the photo returned by the to-be-produced camera;
calculating a calibration parameter of the to-be-produced camera according to the returned photo;
performing panoramic splicing of the returned photo once according to the calibration parameter of the to-be-produced camera, and returning the calibration parameter to the to-be-produced camera.

The ratio of length to width to height of the calibration room is 4:4:3, and the number of the calibration feature patterns is 8; geometric centers of the 8 calibration feature patterns are located on the circumference of a same circle, and the geometric centers of the 8 calibration feature patterns are points at which the circumference of the circle intersects with an edge of a bisecting cross section of the calibration room.

Preferably, the calibration feature patterns are each an ellipse, and a middle portion of the ellipse has two identical rectangles; the length and width of each of the two rectangles are coaxial with a major axis and a minor axis of the ellipse respectively, and the two rectangles are symmetrical with respect to an origin of the ellipse.

Preferably, a to-be-produced camera fixing apparatus is disposed at a geometric center position of the bottom of the calibration room, and the to-be-produced camera fixing apparatus includes a tripod and a camera clamp; the tripod is configured to support the camera clamp and the to-be-produced camera, and the camera clamp is configured to clamp the to-be-produced camera; an optical axis of the to-be-produced camera is parallel to a horizontal plane of the bottom of the calibration room, and a height of the optical axis of the to-be-produced camera relative to the horizontal plane of the bottom of the calibration room is a half that of the calibration room; two opposite faces of side faces of the calibration room each include a black and white grid plate, and the two black and white grid plates are square plates with a 1:1 ratio of black to white; and the optical axis of the to-be-produced camera is perpendicular to the two black and white grid plates and passes through geometric centers of the two black and white grid plates.

Compared with the prior art, the present application provides a method for inspection of the panoramic camera splicing before mass production of a panoramic camera which can perform efficient inspection of the panoramic camera splicing according to the calibration parameter through quick setting of the calibration room, thereby making the mass production of the panoramic camera efficient, stable and reliable, and implementing quick mass production of the panoramic camera. In addition, the calibration feature patterns in the calibration room enable the to-be-produced camera to fully cover all areas of the calibration room during shooting and thus avoid blind corners, thereby also making a panoramic splicing comparison accurate and efficient for the panoramic camera. Therefore, high efficiency of mass production is also ensured.

In the second aspect, the present application provides a system for inspection of the panoramic camera splicing before mass production of a panoramic camera, including:
a room calibration module configured to set a calibration room for a to-be-produced camera;
a parameter calibration module configured to calculate a calibration parameter of the to-be-produced camera, and perform panoramic splicing of the to-be-produced camera according to the calibration parameter; and
a mass production determination module configured to determine whether the to-be-produced camera is qualified according to an effect of the panoramic splicing of the to-be-produced camera, where if there is no serious splicing seam in the effect of panoramic photo splicing, the to-be-produced camera is mass-produced by a mass production device.

The room calibration module includes a dimension calibration module and a feature pattern calibration module, where the dimension calibration module is configured to determine a ratio of length to width to height of the calibration room; and the feature pattern calibration module is configured to determine the number of calibration feature patterns and corresponding locations thereof.

Preferably, the parameter calibration module includes a camera control module, a parameter determination module and a camera inspection module, where
the camera control module is configured to control the to-be-produced camera to take a photo, and receive the photo returned by the to-be-produced camera;
the parameter determination module is configured to calculate a calibration parameter of the to-be-produced camera according to the returned photo; and
the camera inspection module is configured to perform panoramic splicing of the returned photo once according to the calibration parameter of the to-be-produced camera, and return the calibration parameter to the to-be-produced camera.

The ratio of length to width to height of the calibration room is 4:4:3, and the number of the calibration feature patterns is 8; geometric centers of the 8 calibration feature patterns are located on the circumference of a same circle, and the geometric centers of the 8 calibration feature patterns are points at which the circumference of the circle intersects with an edge of a bisecting cross section of the calibration room.

Preferably, the calibration feature patterns are each an ellipse, and a middle portion of the ellipse has two identical rectangles; the length and width of each of the two rectangles are coaxial with a major axis and a minor axis of the ellipse respectively, and the two rectangles are symmetrical with respect to an origin of the ellipse.

Preferably, a to-be-produced camera fixing apparatus is disposed at a geometric center position of the bottom of the calibration room, and the to-be-produced camera fixing apparatus includes a tripod and a camera clamp; the tripod is configured to support the camera clamp and the to-be-produced camera, and the camera clamp is configured to clamp the to-be-produced camera; an optical axis of the to-be-produced camera is parallel to a horizontal plane of the bottom of the calibration room, and a height of the optical axis of the to-be-produced camera relative to the horizontal plane of the bottom of the calibration room is a half that of the calibration room; two opposite faces of side faces of the calibration room each include a black and white grid plate, and the two black and white grid plates are square plates with a 1:1 ratio of black to white; and the optical axis of the to-be-produced camera is perpendicular to the two black and white grid plates and passes through geometric centers of the two black and white grid plates.

Compared with the prior art, the present application provides a system for inspection of the panoramic camera splicing before mass production of a panoramic camera, which can perform efficient inspection of the panoramic camera splicing through quick setting of the calibration room and according to the calibration parameter, thereby making the mass production of the panoramic camera efficient, stable and reliable, and implementing quick mass production of the panoramic camera. In addition, the calibration feature patterns in the calibration room enable the to-be-produced camera to fully cover all areas of the calibration room during shooting and thus avoid blind corners, thereby also making a panoramic splicing comparison accurate and efficient for the panoramic camera. Therefore, high efficiency of mass production is also ensured.

### BRIEF DESCRIPTION OF DRAWINGS

In order to explain technical solutions of the present application more clearly, the accompanying drawings used in the description of the embodiments will be briefly introduced below. Apparently, the accompanying drawings in the following description are only some embodiments of the present application, and a person of ordinary skill in the art can also obtain other accompanying drawings according to these accompanying drawings without any creative work.
FIG. 1 is a schematic flow chart of an implementation of a method for inspection of the panoramic camera splicing before mass production of a panoramic camera disclosed by an embodiment of the present application;
FIG. 2 is a schematic flow chart of another implementation of a method for inspection of the panoramic camera splicing before mass production of a panoramic camera disclosed by an embodiment of the present application;
FIG. 3 is a schematic structural view of an implementation of a calibration room disclosed by an embodiment of the present application;
FIG. 4 is a schematic structural view of an implementation of a calibration feature pattern disclosed by an embodiment of the present application;
FIG. 5 is a schematic structural view of an implementation of a system for inspection of the panoramic camera splicing before mass production of a panoramic camera disclosed by an embodiment of the present application; and
FIG. 6 is a schematic structural view of another implementation of a system for inspection of the panoramic camera splicing before mass production of a panoramic camera disclosed by an embodiment of the present application.

Reference numerals of main components

| | |
|---|---|
| Room calibration module | 10 |
| Parameter calibration module | 20 |
| Mass production determination module | 30 |
| Dimension calibration module | 100 |
| Feature pattern calibration module | 102 |
| Camera control module | 200 |
| Parameter determination module | 202 |
| Camera inspection module | 204 |

### DETAILED DESCRIPTION

To make the objectives, technical solutions, and advantages of the present application clearer and more comprehensible, the following further describes the present application in detail with reference to the accompanying drawings and embodiments. It should be understood that the specific embodiments described herein are merely used to explain the present application and are not intended to limit the present application.

In addition, the terms "include" and "have" and any variations thereof in the specification and claims of the present application and the above accompanying drawings are intended to cover a non-exclusive inclusion. For example, processes, methods, systems, products, or devices that include a series of steps or units is not limited to the listed steps or units, but optionally also includes steps or units not listed, or, optionally, other steps or units inherent to these processes, methods, products or devices.

The implementation of the present application will be described in detail below with reference to specific embodiments.

Embodiments of the present application provide a method and system for inspection of the panoramic camera splicing before mass production of a panoramic camera, which can perform efficient inspection of panoramic camera splicing according to a calibration parameter through quick setting of a calibration room. Details are described below separately.

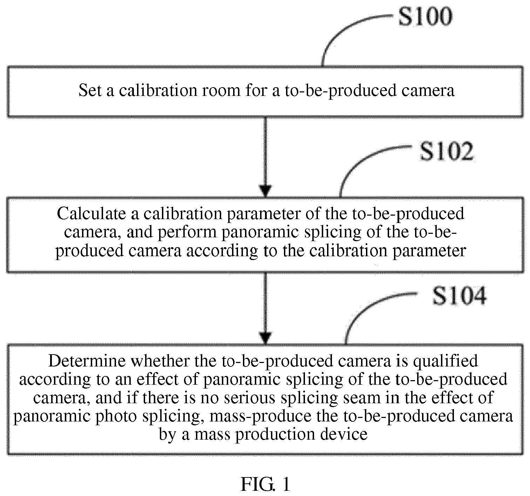

Reference is made to FIG. 1, which is a schematic flow chart of an implementation of a method for inspection of the panoramic camera splicing before mass production of a panoramic camera disclosed by an embodiment of the present application. As shown in FIG. 1, a method for inspection of the panoramic camera splicing before mass production of a panoramic camera disclosed by an embodiment of the present application includes steps:
Step S100: Set a calibration room for a to-be-produced camera.
Step S102: Calculate a calibration parameter of the to-be-produced camera, and perform panoramic splicing of the to-be-produced camera according to the calibration parameter.
Step S104: Determine whether the to-be-produced camera is qualified according to an effect of panoramic splicing of the to-be-produced camera, and if there is no serious splicing seam in the effect of panoramic photo splicing, mass-produce the to-be-produced camera by a mass production device.

In general, if a serious splicing seam occurs in the effect of the panorama photo splicing, it is determined that the to-be-produced camera is a defective product, and thus the to-be-produced camera is not mass-produced.

In the embodiment of the present application, by quickly setting a calibration room, performing efficient inspection of the panoramic camera splicing according to the calibration parameter, determining a splicing result, and providing quick mass production of the panoramic camera, the mass production of the panoramic camera is efficient, stable and reliable.

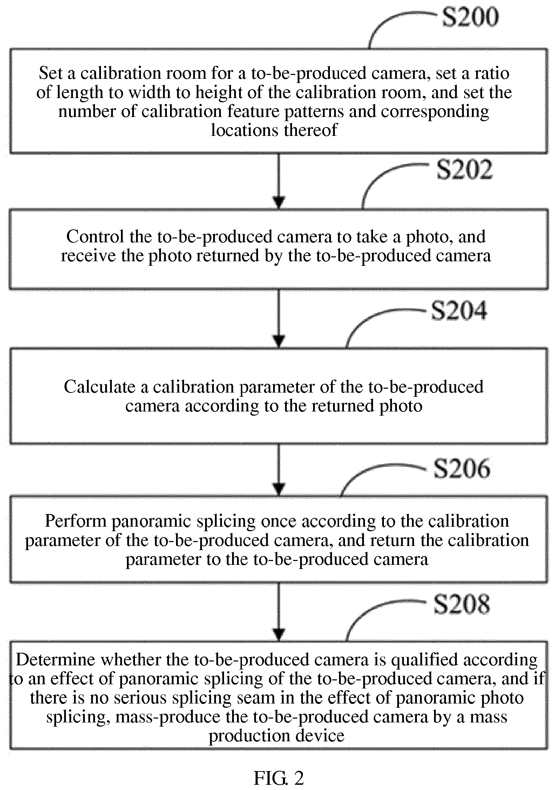

Reference is made to FIG. 2, which is a schematic flow chart of another implementation of a method for inspection of the panoramic camera splicing before mass production of a panoramic camera disclosed by an embodiment of the present application. As shown in FIG. 2, a method for inspection of the panoramic camera splicing before mass production of a panoramic camera disclosed by an embodiment of the present application includes the following steps:
Step S200: Set a calibration room for a to-be-produced camera, determine a ratio of length to width to height of the calibration room, and set the number of calibration feature patterns and corresponding locations thereof.

The number of the calibration feature patterns is 8; geometric centers of the 8 calibration feature patterns are located on the circumference of a same circle, and the geometric centers of the 8 calibration feature patterns are points at which the circumference of the circle intersects with an edge of a bisecting cross section of the calibration room.

The calibration feature patterns are each an ellipse, and a middle portion of the ellipse has two identical rectangles; the length and width of each of the two rectangles are coaxial with a major axis and a minor axis of the ellipse respectively, and the two rectangles are symmetrical with respect to an origin of the ellipse.

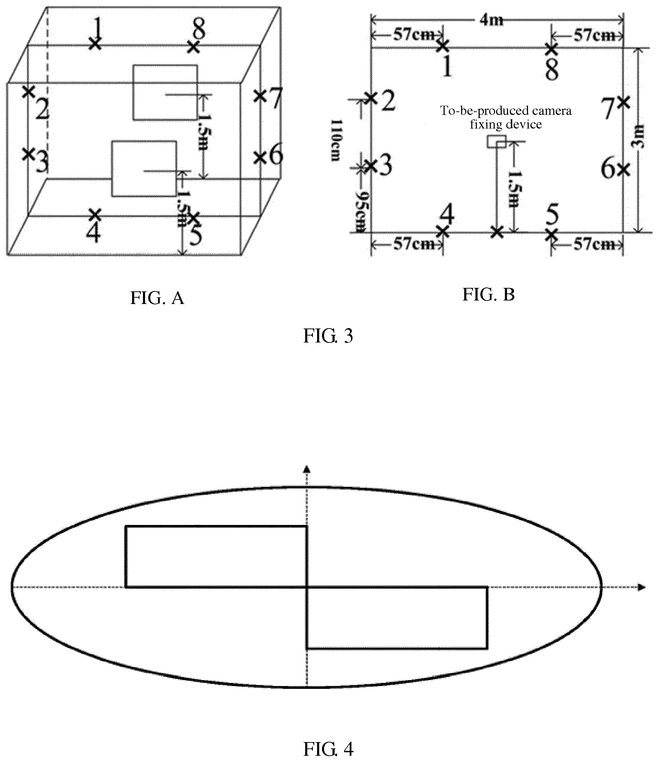

A to-be-produced camera fixing apparatus is disposed at a geometric center position of the bottom of the calibration room, and the to-be-produced camera fixing apparatus includes a tripod and a camera clamp; the tripod is configured to support the camera clamp and the to-be-produced camera, and the camera clamp is configured to clamp the to-be-produced camera; an optical axis of the to-be-produced camera is parallel to a horizontal plane of the bottom of the calibration room, and a height of the optical axis of the to-be-produced camera relative to the horizontal plane of the bottom of the calibration room is a half that of the calibration room; two opposite faces of side faces of the calibration room each include a black and white grid plate, and the two black and white grid plates are square plates with a 1:1 ratio of black to white; and the optical axis of the to-be-produced camera is perpendicular to the two black and white grid plates and passes through geometric centers of the two black and white grid plates. See FIG. 3 for a detailed schematic view of the calibration room.
Step S202: Control the to-be-produced camera to take a photo, and receive the photo returned by the to-be-produced camera.
Step S204: Calculate a calibration parameter of the to-be-produced camera according to the returned photo; generally, store the calibration parameter to a non-volatile storage space of the to-be-produced camera after the to-be-produced camera receives the calibration parameter.
Step S206: Perform panoramic splicing once according to the calibration parameter of the to-be-produced camera, and return the calibration parameter to the to-be-produced camera.
Step S208: Determine whether the to-be-produced camera is qualified according to an effect of panoramic splicing of the to-be-produced camera, and if there is no serious splicing seam in the effect of panoramic photo splicing, mass-produce the to-be-produced camera by a mass production device; and if there is a serious splicing seam in the effect of panoramic photo splicing, the to-be-produced camera is a defective product and is not mass-produced.

In the embodiment of the present application, by quickly setting a calibration room, performing efficient inspection of the panoramic camera splicing according to the calibration parameter, determining a splicing result, and providing quick mass production of the panoramic camera, the mass production of the panoramic camera is efficient, stable and reliable.

Reference is made to FIG. 3, which is a schematic structural view of an implementation of a calibration room disclosed by an embodiment of the present application.

In this implementation, Figure A is a stereoscopic view of the calibration room, where a ratio of length to width to height of the calibration room is 4:4:3, and calibration feature pattern includes 8 points identified by "X" (for convenience of description, the feature patterns are replaced with points). Please refer to FIG. 4 for specific calibration feature patterns.

Specifically, the length, width, and height of the calibration room are 4 m, 4 m, and 3 m, respectively, and it can be seen that the 8 calibration feature patterns may be connected to be a circle and intersect with a bisecting cross section. In addition, two opposite faces of side faces of the calibration room each include a black and white grid plate, and the black and white grid plate is a square plate with a ratio of 1:1; the black and white grid plate is a checkered plate formed by black alternating with white, and an optical axis of the to-be-produced camera is perpendicular to the two black and white grid plates and passes through geometric centers of the two black and white grid plates. In this implementation, the pair of black and white grid plates is configured to calibrate a binocular panoramic camera.

In other implementations, two pairs of black and white grid plates may be used on the side faces of the calibration room, and the two pairs of black and white grid plates are configured to calibrate a quad-ocular panoramic camera.

FIG. B is a plane view of a bisecting cross section. The specific locations of the 8 calibration feature patterns can be seen from FIG. B. In addition, as can be seen from the figure, a to-be-produced camera fixing apparatus is disposed at a ground center of the calibration room, and the to-be-produced camera fixing apparatus includes a tripod and a camera clamp; the tripod is configured to support the camera clamp and the to-be-produced camera, and the camera clamp is configured to clamp the to-be-produced camera; an optical axis of the to-be-produced camera is parallel to a horizontal plane of the bottom of the calibration room, and a height of the optical axis of the to-be-produced camera relative to the horizontal plane of the bottom of the calibration room is a half that of the calibration room; and two opposite faces of side faces of the calibration room each include a black and white grid plate, so that the camera can shoot more areas during the shooting and avoid blind corners.

In the embodiment of the present application, by quickly setting a calibration room, performing efficient inspection of the panoramic camera splicing according to the calibration parameter, determining a splicing result, and providing quick mass production of the panoramic camera, the mass production of the panoramic camera is efficient, stable and reliable.

Reference is made to FIG. 4, which is a schematic structural view of an implementation of a calibration feature pattern disclosed by an embodiment of the present application. In this implementation, the calibration feature patterns are each an ellipse, and a middle portion of the ellipse has two identical rectangles; the length and width of each of the two rectangles are coaxial with a major axis and a minor axis of the ellipse respectively, and the two rectangles are symmetrical with respect to an origin of the ellipse.

Specifically, area 2 and area 3 are two intersecting rectangles respectively, and intersect at the center of the ellipse. Area 1 within the ellipse region which is other than the area 2 and the area 3 presents a large color contrast to the area 2 and the area 3, to facilitate splicing inspection of the to-be-produced camera. Specifically, the area 1, the area 2 and the area 3 are generally black and white respectively, commonly known as black and white grids.

Certainly, there is another way for the rectangular area 2 and the area 3 to be symmetrical with respect to the origin of the ellipse, and details are not described herein again.

Eight calibration feature patterns in black and white grid format can implement the mass production splicing inspection of a to-be-produced binocular camera, and the 16 calibration feature patterns in black and white grid format can implement the mass production splicing inspection of a to-be-produced quad-ocular camera, where the 16 calibration feature patterns in black and white grid format are located at two pairs of faces of side faces of the calibration room.

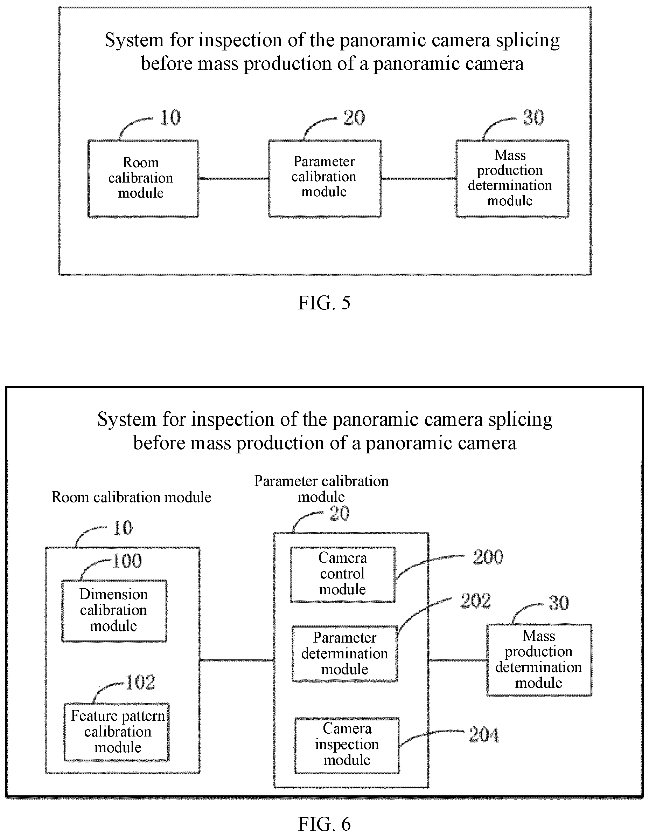

Reference is made to FIG. 5, which is a schematic structural view of an implementation of a system for inspection of the panoramic camera splicing before mass production of a panoramic camera disclosed by an embodiment of the present application, where the system for inspection of the panoramic camera splicing before mass production of a panoramic camera includes a room calibration module 10, a parameter calibration module 20, and a mass production determination module 30.

In this embodiment, the room calibration module 10 is configured to set a calibration room for a to-be-produced camera. The parameter calibration module 20 is configured to calculate a calibration parameter of the to-be-produced camera, and perform panoramic splicing of the to-be-produced camera according to the calibration parameter. The mass production determination module 30 is configured to determine whether the to-be-produced camera is qualified according to an effect of panoramic splicing of the to-be-produced camera, and if there is no serious splicing seam in the effect of panoramic photo splicing, a mass production device mass-produces the to-be-produced camera.

Similarly, the number of the calibration feature patterns is 8; geometric centers of the 8 calibration feature patterns are located on the circumference of a same circle, and the geometric centers of the 8 calibration feature patterns are points at which the circumference of the circle intersects with an edge of a bisecting cross section of the calibration room.

The calibration feature patterns are each an ellipse, and a middle portion of the ellipse has two identical rectangles; the length and width of each of the two rectangles are coaxial with a major axis and a minor axis of the ellipse respectively, and the two rectangles are symmetrical with respect to an origin of the ellipse.

A to-be-produced camera fixing apparatus is disposed at a geometric center position of the bottom of the calibration room, and the to-be-produced camera fixing apparatus includes a tripod and a camera clamp; the tripod is configured to support the camera clamp and the to-be-produced camera, and the camera clamp is configured to clamp the to-be-produced camera; an optical axis of the to-be-produced camera is parallel to a horizontal plane of the bottom of the calibration room, and a height of the optical axis of the to-be-produced camera relative to the horizontal plane of the bottom of the calibration room is a half that of the calibration room; two opposite faces of side faces of the calibration room each include a black and white grid plate, and the two black and white grid plates are square plates with a 1:1 ratio of black to white; and the optical axis of the to-be-produced camera is perpendicular to the two black and white grid plates and passes through geometric centers of the two black and white grid plates. See FIG. 3 for a detailed schematic view of the calibration room, and details are not described here.

The to-be-produced camera is in communication with the system for mass production of a panoramic camera through a USB interface, and each module in the system for mass production of a panoramic camera controls the photographing of the to-be-produced camera, the transmission of the calibration parameter, and photo transmission and the like through a USB interface.

It is worth mentioning that in order to ensure the mass production calibration efficiency of the to-be-produced camera, a mass production firmware program is recorded in advance before a camera inspection calibration step, and the mass production firmware program is recorded through a USB interface.

Reference is made to FIG. 6, which is a schematic structural view of another implementation of a system for mass production of a panoramic camera disclosed by an embodiment of the present application, where the system for mass production of a panoramic camera includes a room calibration module 10, a parameter calibration module 20, and a mass production determination module 30. The room calibration module 10 includes a dimension calibration module 100 and a feature pattern calibration module 102; and the parameter calibration module includes a camera control module 200, a parameter determination module 202, and a camera inspection module 204. Each module is connected by a certain communication method.

In this implementation, the dimension calibration module 100 is configured to determine a ratio of length to width to height of the calibration room; and the feature pattern calibration module 102 is configured to determine the number of calibration feature patterns and corresponding locations thereof.

The camera control module 200 is configured to control the to-be-produced camera to take a photo, and receive the photo returned by the to-be-produced camera; the parameter determination module 202 is configured to calculate a calibration parameter of the to-be-produced camera according to the returned photo; and the camera inspection module 204 is configured to control the to-be-produced camera to take a photo again, receive the photo returned by the to-be-produced camera again, and perform panoramic splicing once according to the calibration parameter of the to-be-produced camera.

More specifically, the number of the calibration feature patterns is 8; geometric centers of the 8 calibration feature patterns are located on the circumference of a same circle, and the geometric centers of the 8 calibration feature patterns are points at which the circumference of the circle intersects with an edge of a bisecting cross section of the calibration room.

The calibration feature patterns are each an ellipse, and a middle portion of the ellipse has two identical rectangles; the length and width of each of the two rectangles are coaxial with a major axis and a minor axis of the ellipse respectively, and the two rectangles are symmetrical with respect to an origin of the ellipse.

A to-be-produced camera fixing apparatus is disposed at a geometric center position of the bottom of the calibration room, and the to-be-produced camera fixing apparatus includes a tripod and a camera clamp; the tripod is configured to support the camera clamp and the to-be-produced camera, and the camera clamp is configured to clamp the to-be-produced camera; an optical axis of the to-be-produced camera is parallel to a horizontal plane of the bottom of the calibration room, and a height of the optical axis of the to-be-produced camera relative to the horizontal plane of the bottom of the calibration room is a half that of the calibration room; two opposite faces of side faces of the calibration room each include a black and white grid plate, and the two black and white grid plates are square plates with a 1:1 ratio of black to white; and the optical axis of the to-be-produced camera is perpendicular to the two black and white grid plates and passes through geometric centers of the two black and white grid plates. See FIG. 3 for a detailed schematic view of the calibration room, and details are not described here.

The to-be-produced camera is in communication with the system for mass production of a panoramic camera through a USB interface, and each module in the system for mass production of a panoramic camera controls the photographing of the to-be-produced camera, the transmission of the calibration parameter, and photo transmission and the like through a USB interface.

It is worth mentioning that in order to ensure the mass production calibration efficiency of the to-be-produced camera, a mass production firmware program is recorded in advance before a camera inspection calibration step, and the mass production firmware program is recorded through a USB interface.

It should be noted that, for the sake of simple description, the foregoing method embodiments are all expressed as a series of action combinations, but those skilled in the art should understand that the present application is not limited by the described action sequence, because certain steps may be performed in other sequences or concurrently in accordance with the present application.

In the above embodiments, the descriptions of the various embodiments are different, and for the parts that are not detailed in a certain embodiment, see the related descriptions of other embodiments.

In some embodiments provided by the present application, it should be understood that a disclosed device may be implemented in other manners. For example, the device embodiments described above are merely illustrative. For example, the division of units is only a logical function division, and in actual implementation, there may be another division manner. For example, multiple units or components may be combined or integrated into another system, or some features may be omitted or not implemented. In addition, the mutual coupling or direct coupling or communication connection shown or discussed may be an indirect coupling or communication connection through some interfaces, devices or units, and may be electrical or otherwise.

Units described as separate components may or may not be physically separated, and components displayed as units may or may not be physical units, that is, the units and the components may be located at one place, or may be distributed to multiple network units. Some or all of the units may be selected according to actual needs to achieve the objective of the solution of the embodiment.

In addition, each functional unit in each embodiment of the present application may be integrated into one processing unit, or each unit may exist physically separately, or two or more units may be integrated into one unit. The above integrated unit can be implemented in the form of hardware or in the form of a software functional unit.

The integrated unit, if implemented in the form of a software functional unit and sold or used as an independent product, may be stored in a computer readable memory. Based on such understanding, the technical solution of the present application, in essence or the contribution to the prior art, or all or part of the technical solution may be embodied in the form of a software product. The computer software product is stored in a memory, and includes a plurality of instructions used to cause a computer device (which may be a personal computer, a parameter calibration module, or a network device, etc.) to perform all or part of the steps of the method described in various embodiments of the present application. The foregoing memory includes various media that can store program codes, such as a USB flash disk, a read-only memory (ROM), a random access memory (RAM), a mobile hard disk, a magnetic disk, or an optical disc.

Those of ordinary skilled in the art can understand that all or some steps in various methods of the above embodiments can be completed through instructing related hardware by a program, and the program can be stored in a computer readable memory, and the memory may include a read only memory (ROM), a random access memory (RAM), a magnetic disk or an optical disc, etc.

The above are only the preferred embodiments of the present application, and are not intended to limit the present application, except as defined by the appended claims.

## Claims

1. A method for inspection of the panoramic camera splicing before mass production of a panoramic camera, wherein the method comprises:
setting a calibration room for a to-be-produced camera;
calculating a calibration parameter of the to-be-produced camera, and performing panoramic splicing of the to-be-produced camera according to the calibration parameter;
determining whether the to-be-produced camera is qualified according to an effect of the panoramic splicing of the to-be-produced camera, and if there is no serious splicing seam in the effect of panoramic photo splicing, a mass production device would mass produce the to-be-produced camera;
wherein the method step of setting the calibration room comprises:
determining a ratio of length to width to height of the calibration room; and
determining the number of calibration feature patterns and corresponding locations thereof;
**characterized in that**
the ratio of length to width to height of the calibration room is 4:4:3, and the number of the calibration feature patterns is 8; geometric centers of the 8 calibration feature patterns are located on the circumference of a same circle, and the geometric centers of the 8 calibration feature patterns are points at which the circumference of the circle intersects with an edge of a bisecting cross section of the calibration room.

2. The method according to claim 1, wherein the method further comprises:
controlling the to-be-produced camera to take a photo, and receiving the photo returned by the to-be-produced camera;
calculating a calibration parameter of the to-be-produced camera according to the returned photo;
performing panoramic splicing of the returned photo once according to the calibration parameter of the to-be-produced camera, and returning the calibration parameter to the to-be-produced camera.

3. The method according to claim 1, wherein the calibration feature patterns are each an ellipse, and a middle portion of the ellipse has two identical rectangles; the length and width of each of the two rectangles are coaxial with a major axis and a minor axis of the ellipse respectively, and the two rectangles are symmetrical with respect to an origin of the ellipse.

4. The method according to any one of claims 1 to 3, wherein a to-be-produced camera fixing apparatus is disposed at a geometric center position of the bottom of the calibration room, and the to-be-produced camera fixing apparatus comprises a tripod and a camera clamp; the tripod is configured to support the camera clamp and the to-be-produced camera, and the camera clamp is configured to clamp the to-be-produced camera; an optical axis of the to-be-produced camera is parallel to a horizontal plane of the bottom of the calibration room, and a height of the optical axis of the to-be-produced camera relative to the horizontal plane of the bottom of the calibration room is a half that of the calibration room; two opposite faces of side faces of the calibration room each comprise a black and white grid plate, and the two black and white grid plates are square plates with a 1:1 ratio of black to white; and the optical axis of the to-be-produced camera is perpendicular to the two black and white grid plates and passes through geometric centers of the two black and white grid plates.

5. A system for inspection of the panoramic camera splicing before mass production of a panoramic camera, wherein the system comprises:
a room calibration module (10) configured to set a calibration room for a to-be-produced camera;
a parameter calibration module (20) configured to calculate a calibration parameter of the to-be-produced camera, and perform panoramic splicing of the to-be-produced camera according to the calibration parameter; and
a mass production determination module (30) configured to determine whether the to-be-produced camera is qualified according to an effect of the panoramic splicing of the to-be-produced camera, wherein if there is no serious splicing seam in the effect of panoramic photo splicing, the to-be-produced camera is mass-produced by a mass production device; wherein the room calibration module (10) comprises a dimension calibration module (100) and a feature pattern calibration module (102), wherein
the dimension calibration module (100) is configured to determine a ratio of length to width to height of the calibration room; and
the feature pattern calibration module (102) is configured to determine the number of calibration feature patterns and corresponding locations thereof;
**characterized in that**
the ratio of length to width to height of the calibration room is 4:4:3, and the number of the calibration feature patterns is 8; geometric centers of the 8 calibration feature patterns are located on the circumference of a same circle, and the geometric centers of the 8 calibration feature patterns are points at which the circumference of the circle intersects with an edge of a bisecting cross section of the calibration room.

6. The system according to claim 5, wherein the parameter calibration module (20) comprises a camera control module (200), a parameter determination module (202) and a camera inspection module (204), wherein
the camera control module (200) is configured to control the to-be-produced camera to take a photo, and receive the photo returned by the to-be-produced camera;
the parameter determination module (202) is configured to calculate a calibration parameter of the to-be-produced camera according to the returned photo; and
the camera inspection module (204) is configured to perform panoramic splicing of the returned photo once according to the calibration parameter of the to-be-produced camera, and return the calibration parameter to the to-be-produced camera.

7. The system according to claim 5, wherein the calibration feature patterns are each an ellipse, and a middle portion of the ellipse has two identical rectangles; the length and width of each of the two rectangles are coaxial with a major axis and a minor axis of the ellipse respectively, and the two rectangles are symmetrical with respect to an origin of the ellipse.

8. The system according to any one of claims 5 to 7, wherein a to-be-produced camera fixing apparatus is disposed at a geometric center position of the bottom of the calibration room, and the to-be-produced camera fixing apparatus comprises a tripod and a camera clamp; the tripod is configured to support the camera clamp and the to-be-produced camera, and the camera clamp is configured to clamp the to-be-produced camera; an optical axis of the to-be-produced camera is parallel to a horizontal plane of the bottom of the calibration room, and a height of the optical axis of the to-be-produced camera relative to the horizontal plane of the bottom of the calibration room is a half that of the calibration room; two opposite faces of side faces of the calibration room each comprise a black and white grid plate, and the two black and white grid plates are square plates with a 1:1 ratio of black to white; and the optical axis of the to-be-produced camera is perpendicular to the two black and white grid plates and passes through geometric centers of the two black and white grid plates.

## Patentansprüche

1. Verfahren zur Prüfung des Panoramakamera-Splicings vor der Massenproduktion einer Panoramakamera, wobei das Verfahren die folgenden Schritte aufweist:
Einstellen eines Kalibrierraums für eine herzustellende Kamera;
Berechnen eines Kalibrierparameters der herzustellenden Kamera, und Durchführen eines Panorama-Splicings der herzustellenden Kamera gemäß dem Kalibrierparameter;
Feststellen, gemäß einem Effekt des Panorama-Splicings der herzustellenden Kamera, ob die herzustellende Kamera qualifiziert ist, und falls keine erhebliche Splicing-Naht in dem Effekt des Panoramafoto-Splicing vorhanden ist, Herstellen der herzustellenden Kamera durch eine Massenproduktionsvorrichtung;
wobei der Verfahrensschritt des Einstellens des Kalibrierraums die folgenden Schritte aufweist:
Bestimmen eines Verhältnisses zwischen der Länge, der Breite und der Höhe des Kalibrierraums; und
Bestimmen der Anzahl der Kalibriermerkmalsmuster und der entsprechenden Positionen derselben;
**dadurch gekennzeichnet, dass**
das Verhältnis zwischen der Länge, der Breite und der Höhe des Kalibrierraums 4:4:3 ist, und die Anzahl der Kalibriermerkmalsmuster 8 beträgt; die geometrischen Mittelpunkte der 8 Kalibriermerkmalsmuster auf dem Umfang desselben Kreises angeordnet sind, und die geometrischen Mittelpunkte der 8 Kalibriermerkmalsmuster Punkte sind, an welchen der Umfang des Kreises einen Rand eines **Halbierungsquerschnitts** des Kalibrierraums schneidet.

2. Verfahren nach Anspruch 1, bei welchem das Verfahren ferner die folgenden Schritte aufweist:
Steuern der herzustellenden Kamera zur Aufnahme eines Fotos, und Empfangen des von der herzustellenden Kamera übermittelten Fotos;
Berechnen eines Kalibrierparameters der herzustellenden Kamera gemäß dem übermittelten Foto;
einmaliges Durchführen eines Panorama-Splicings des übermittelten Fotos gemäß dem Kalibrierparameter der herzustellenden Kamera, und Übermitteln des Kalibrierparameters an die herzustellende Kamera.

3. Verfahren nach Anspruch 1, bei welchem die Kalibrierfunktionsmuster jeweils eine Ellipse sind, und ein Mittelbereich der Ellipse zwei identische Rechtecke aufweist; die Länge und die Breite jedes der beiden Rechtecke jeweils mit einer Hauptachse und einer Nebenachse der Ellipse koaxial sind, und die beiden Rechtecke in Bezug auf einen Ursprung der Ellipse symmetrisch sind.

4. Verfahren nach einem der Ansprüche 1 bis 3, bei welchem eine Vorrichtung zum Fixieren der herzustellenden Kamera an einer geometrischen Mittelpunktposition der Unterseite des Kalibrierraums angeordnet wird, und die Vorrichtung zum Fixieren der herzustellenden Kamera ein Stativ und eine Kameraklemme aufweist; das Stativ dazu ausgebildet ist, die Kameraklemme und die herzustellende Kamera zu stützen, und die Kameraklemme dazu ausgebildet ist, die herzustellende Kamera zu klemmen; eine optische Achse der herzustellenden Kamera parallel zur horizontalen Ebene der Unterseite des Kalibrierraums verläuft, und eine Höhe der optischen Achse der herzustellenden Kamera relativ zu der horizontalen Ebene der Unterseite des Kalibrierraums die Hälfte derjenigen des Kalibrierraums beträgt; zwei gegenüberliegende Seiten von Seitenflächen des Kalibrierraums jeweils eine Schwarz/Weiß-Rasterplatte aufweisen, und die beiden Schwarz/Weiß-Rasterplatten quadratische Platte mit einem Schwarz/Weiß-Verhältnis von 1:1 sind; und die optische Achse der herzustellenden Kamera senkrecht zu den beiden Schwarz/Weiß-Rasterplatten ist und durch geometrische Mittelpunkte der beiden Schwarz/Weiß-Rasterplatten verläuft.

5. System zur Prüfung des Panoramakamera-Splicings vor der Massenherstellung einer Panoramakamera, wobei das System aufweist:
ein Raumkalbriermodul (10), das dazu ausgebildet ist, einen Kalibrierraum für eine herzustellende Kamera einzustellen;
ein Parameterkalibriermodul (20), das dazu ausgebildet ist, einen Kalibrierparameter der herzustellenden Kamera zu berechnen, und ein Panorama-Splicing der herzustellenden Kamera gemäß dem Kalibrierparameter durchzuführen; und
ein Massenherstellungs-Feststellmodul (30), das dazu ausgebildet ist, gemäß einem Effekt des Panorama-Splicings der herzustellenden Kamera, festzustellen, ob die herzustellende Kamera qualifiziert ist, wobei, falls keine erhebliche Splicing-Naht in dem Effekt des Panoramafoto-Splicing vorhanden ist, die herzustellende Kamera durch eine Massenproduktionsvorrichtung hergestellt wird; wobei das Raumkalbriermodul (10) ein Dimensionskalibriermodul (100) und ein Merkmalsmusterkalibriermodul (102) aufweist, wobei
das Dimensionskalibriermodul (100) dazu ausgebildet ist, ein Verhältnis zwischen der Länge, der Breite und der Höhe des Kalibrierraums zu bestimmen; und
das Merkmalsmusterkalibriermodul (102) dazu ausgebildet ist, die Anzahl der Kalibriermerkmalsmuster und der entsprechenden Positionen derselben zu bestimmen;
**dadurch gekennzeichnet, dass**
das Verhältnis zwischen der Länge, der Breite und der Höhe des Kalibrierraums 4:4:3 ist, und die Anzahl der Kalibriermerkmalsmuster 8 beträgt; die geometrischen Mittelpunkte der 8 Kalibriermerkmalsmuster auf dem Umfang desselben Kreises angeordnet sind, und die geometrischen Mittelpunkte der 8 Kalibriermerkmalsmuster Punkte sind, an welchen der Umfang des Kreises einen Rand eines Halbierungsquerschnitts des Kalibrierraums schneidet.

6. System nach Anspruch 5, bei welchem das Parameterkalibriermodul (20) ein Kamerasteuermodul (200), ein Parameterbestimmungsmodul (202) und ein Kameraprüfmodul (204) aufweist, wobei
das Kamerasteuermodul (200) dazu ausgebildet ist, die herzustellende Kamera zum Aufnehmen eines Fotos zu steuern, und das von der herzustellenden Kamera übermittelte Foto zu empfangen;
das Parameterbestimmungsmodul (202) dazu ausgebildet ist, einen Kalibrierparameter der herzustellenden Kamera gemäß dem übermittelten Foto zu berechnen; und
das Kameraprüfmodul (204) dazu ausgebildet ist, ein einmaliges Panorama-Splicing des übermittelten Fotos gemäß dem Kalibrierparameter der herzustellenden Kamera durchzuführen, und den Kalibrierparameter an die herzustellende Kamera zu übermitteln.

7. System nach Anspruch 5, bei welchem die Kalibriermerkmalsmuster Kalibrierfunktionsmuster jeweils eine Ellipse sind, und ein Mittelbereich der Ellipse zwei identische Rechtecke aufweist; die Länge und die Breite jedes der beiden Rechtecke jeweils mit einer Hauptachse und einer Nebenachse der Ellipse koaxial sind, und die beiden Rechtecke in Bezug auf einen Ursprung der Ellipse symmetrisch sind.

8. System nach einem der Ansprüche 5 bis 7, bei welchem eine Vorrichtung zum Fixieren der herzustellenden Kamera an einer geometrischen Mittelpunktposition der Unterseite des Kalibrierraums angeordnet wird, und die Vorrichtung zum Fixieren der herzustellenden Kamera ein Stativ und eine Kameraklemme aufweist; das Stativ dazu ausgebildet ist, die Kameraklemme und die herzustellende Kamera zu stützen, und die Kameraklemme dazu ausgebildet ist, die herzustellende Kamera zu klemmen; eine optische Achse der herzustellenden Kamera parallel zur horizontalen Ebene der Unterseite des Kalibrierraums verläuft, und eine Höhe der optischen Achse der herzustellenden Kamera relativ zu der horizontalen Ebene der Unterseite des Kalibrierraums die Hälfte derjenigen des Kalibrierraums beträgt; zwei gegenüberliegende Seiten von Seitenflächen des Kalibrierraums jeweils eine Schwarz/Weiß-Rasterplatte aufweisen, und die beiden Schwarz/Weiß-Rasterplatten quadratische Platte mit einem Schwarz/Weiß-Verhältnis von 1:1 sind; und die optische Achse der herzustellenden Kamera senkrecht zu den beiden Schwarz/Weiß-Rasterplatten ist und durch geometrische Mittelpunkte der beiden Schwarz/Weiß-Rasterplatten verläuft.

## Revendications

1. Procédé d'inspection du raccord de caméra panoramique avant la production en série d'une caméra panoramique, le procédé comprenant :
le réglage d'une salle d'étalonnage pour une caméra à produire ;
le calcul d'un paramètre d'étalonnage de la caméra à produire et le fait d'effectuer un raccord panoramique de la caméra à produire en fonction du paramètre d'étalonnage ;
la détermination du fait de savoir si la caméra à produire est qualifiée en fonction d'un effet du raccord panoramique de la caméra à produire et du fait de savoir s'il n'y a pas de joint de raccord important dans l'effet du raccord de photos panoramiques, un dispositif de production de masse produirait en masse la caméra à produire ;
l'étape du procédé de réglage de la salle d'étalonnage comprenant :
la détermination d'un rapport de la longueur à la largeur à la hauteur de la salle d'étalonnage ; et
la détermination du nombre de modèles de caractéristiques d'étalonnage et les emplacements correspondants de ceux-ci ;
**caractérisé en ce que**
le rapport de la longueur à la largeur à la hauteur de la salle d'étalonnage est de 4:4:3 et le nombre de modèles de caractéristiques d'étalonnage est de 8 ; les centres géométriques des 8 modèles d'objets d'étalonnage sont situés sur la circonférence d'un même cercle et les centres géométriques des 8 modèles d'objets d'étalonnage sont des points où la circonférence du cercle croise un bord d'une section transversale en deux parties de la salle d'étalonnage.

2. Procédé selon la revendication 1, dans lequel le procédé comprend en outre :
la commande de la caméra à produire pour prendre une photo et recevoir la photo renvoyée par la caméra à produire ;
le calcul d'un paramètre d'étalonnage de la caméra à produire en fonction de la photo renvoyée ;
le fait d'effectuer un raccord panoramique de la photo renvoyée une fois selon le paramètre d'étalonnage de la caméra à produire et le renvoi du paramètre d'étalonnage à la caméra à produire.

3. Procédé selon la revendication 1, dans lequel les modèles de caractéristiques d'étalonnage sont chacun une ellipse et une partie médiane de l'ellipse a deux rectangles identiques ; la longueur et la largeur de chacun des deux rectangles sont coaxiales à un grand axe et à un petit axe de l'ellipse respectivement et les deux rectangles sont symétriques par rapport à une origine de l'ellipse.

4. Procédé selon l'une quelconque des revendications 1 à 3, dans lequel un appareil de fixation de caméra à produire est disposé au niveau d'une position centrale géométrique du fond de la salle d'étalonnage et l'appareil de fixation de caméra à produire comprend un trépied et une pince de caméra ; le trépied est conçu pour supporter la pince de caméra et la caméra à produire et la pince de caméra est conçue pour serrer la caméra à produire ; un axe optique de la caméra à produire est parallèle à un plan horizontal du fond de la salle d'étalonnage et une hauteur de l'axe optique de la caméra à produire, par rapport au plan horizontal du fond de la chambre d'étalonnage, est la moitié de celle de la salle d'étalonnage ; deux faces opposées des faces latérales de la salle d'étalonnage comprennent chacune une plaque de grille noire et blanche et les deux plaques de grille noire et blanche sont des plaques carrées avec un rapport de 1:1 du noir au blanc ; et l'axe optique de la caméra à produire est perpendiculaire aux deux plaques de grille noire et blanche et passe par les centres géométriques des deux plaques de grille noire et blanche.

5. Système d'inspection du raccord de caméra panoramique avant la production en série d'une caméra panoramique, le système comprenant :
un module d'étalonnage de salle (10) configuré afin de régler une salle d'étalonnage pour une caméra à produire ;
un module d'étalonnage de paramètre (20) configuré pour calculer un paramètre d'étalonnage de la caméra à produire et effectuer un raccord panoramique de la caméra à produire en fonction du paramètre d'étalonnage ; et
un module de détermination de production de masse (30) configuré pour déterminer le fait de savoir si la caméra à produire est qualifiée en fonction d'un effet du raccord panoramique de la caméra à produire, s'il n'y a pas de joint de raccord important dans l'effet de raccord de photos panoramiques, la caméra à produire étant produite en série par un dispositif de production de masse ; le module d'étalonnage de salle (10) comprenant un module d'étalonnage de dimension (100) et un module d'étalonnage de modèles de caractéristiques (102),
le module d'étalonnage de dimension (100) étant configuré pour déterminer un rapport de longueur à largeur à hauteur de la salle d'étalonnage ; et
le module d'étalonnage de modèles de caractéristiques (102) étant configuré pour déterminer le nombre de modèles de caractéristiques d'étalonnage et les emplacements correspondants de ceux-ci ;
**caractérisé en ce que**
le rapport de la longueur à la largeur à la hauteur de la salle d'étalonnage est de 4:4:3 et le nombre de modèles de caractéristiques d'étalonnage est de 8 ; les centres géométriques des 8 modèles d'objets d'étalonnage sont situés sur la circonférence d'un même cercle et les centres géométriques des 8 modèles d'objets d'étalonnage sont des points où la circonférence du cercle croise un bord d'une section transversale en deux parties de la salle d'étalonnage.

6. Système selon la revendication 5, dans lequel le module d'étalonnage de paramètre (20) comprend un module de commande de caméra (200), un module de détermination de paramètre (202) et un module d'inspection de caméra (204),
le module de commande de caméra (200) étant configuré pour commander la caméra à produire afin de prendre une photo et de recevoir la photo renvoyée par la caméra à produire ;
le module de détermination de paramètre (202) étant configuré pour calculer un paramètre d'étalonnage de la caméra à produire en fonction de la photo renvoyée ; et
le module d'inspection de caméra (204) étant configuré pour effectuer un raccord panoramique de la photo renvoyée une fois selon le paramètre d'étalonnage de la caméra à produire et renvoyer le paramètre d'étalonnage à la caméra à produire.

7. Système selon la revendication 5, dans lequel les modèles de caractéristiques d'étalonnage sont chacun une ellipse et une partie médiane de l'ellipse a deux rectangles identiques ; la longueur et la largeur de chacun des deux rectangles sont coaxiales à un grand axe et à un petit axe de l'ellipse respectivement et les deux rectangles sont symétriques par rapport à une origine de l'ellipse.

8. Système selon l'une quelconque des revendications 5 à 7, dans lequel un appareil de fixation de caméra à produire est disposé à une position centrale géométrique du fond de la salle d'étalonnage et l'appareil de fixation de caméra à produire comprend un trépied et une pince de caméra ; le trépied est conçu pour supporter la pince de caméra et la caméra à produire et la pince de caméra est conçue pour serrer la caméra à produire ; un axe optique de la caméra à produire est parallèle à un plan horizontal du fond de la salle d'étalonnage et une hauteur de l'axe optique de la caméra à produire, par rapport au plan horizontal du fond de la chambre d'étalonnage, est la moitié de celle de la salle d'étalonnage ; deux faces opposées des faces latérales de la salle d'étalonnage comprennent chacune une plaque de grille noire et blanche et les deux plaques de grille noire et blanche sont des plaques carrées avec un rapport de 1:1 du noir au blanc ; et l'axe optique de la caméra à produire est perpendiculaire aux deux plaques de grille noire et blanche et passe par les centres géométriques des deux plaques de grille noire et blanche.
